(19) Europäisches Patentamt
European Patent Office
Office européen des brevets

(11) **EP 2 067 082 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(21) Anmeldenummer: **06791412.7**

(22) Anmeldetag: **28.09.2006**

(51) Int Cl.:
*G05B 19/418* (2006.01)   *B23Q 15/00* (2006.01)

(86) Internationale Anmeldenummer:
**PCT/DE2006/001712**

(87) Internationale Veröffentlichungsnummer:
**WO 2008/037231 (03.04.2008 Gazette 2008/14)**

(54) **VERFAHREN ZUM VERSCHLEISS-MINIMIERTEN BETRIEB VON ANLAGENKOMPONENTEN**

METHOD FOR WEAR-MINIMIZED OPERATION OF INSTALLATION COMPONENTS

PROCÉDÉ POUR UN FONCTIONNEMENT QUI MINIMISE L'USURE DE COMPOSANTS D'UNE INSTALLATION

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**10.06.2009 Patentblatt 2009/24**

(73) Patentinhaber: **SIEMENS AKTIENGESELLSCHAFT**
**80333 München (DE)**

(72) Erfinder:
• **GRIEB, Herbert**
  **76316 Malsch (DE)**
• **MÜLLER, Peter**
  **76344 Eggenstein-Leopoldshafen (DE)**
• **PFEIFFER, Bernd-Markus**
  **76744 Wörth (DE)**
• **SCHWAB, Robert**
  **76187 Karlsruhe (DE)**

(56) Entgegenhaltungen:
**EP-A1- 0 644 022    DE-A1- 10 254 819**

**Beschreibung**

Die Erfindung betrifft ein Verfahren zum verschleiß-minimierten Betrieb zumindest einer Anlagenkomponente einer Anlage sowie eine Anlage mit Mitteln zur Durchführung des genannten Verfahrens.

Ein derartiges Verfahren kommt in verfahrenstechnischen Anlagen und Kraftwerken zum Einsatz, in denen beispielsweise rotierende Anlagenkomponenten wie Kreiselpumpen, Verdichter, Turbinen, Mühlen, Zentrifugen usw. eingesetzt werden. Durch Verschleißerscheinungen im laufenden Betrieb kommt es zur Abnutzung der Komponenten, die ggf. bis zum völligen Funktionsausfall führen und dadurch sogar einen Anlagenstillstand erzwingen kann. Deshalb müssen sie in regelmäßigen Abständen gewartet werden. Die Wartungsintervalle müssen so kurz gewählt werden, dass ein überraschender Ausfall so gut wie möglich vermieden werden kann. Eine Verlängerung der Wartungsintervalle kann erreicht werden, indem die Komponenten möglichst schonend betrieben werden, d.h. dass (unter Einhaltung vorgegebener Randbedingungen) eine Fahrweise gewählt wird, bei der die Abnutzung minimal ist. Abnutzungsintensive Betriebszustände können z.B. vorkommen, wenn eine Komponente in ihrer Resonanzfrequenz betrieben wird. Durch die starken Schwingungen kann die Komponente sehr schnell altern.

Bei kritischen Aggregaten wird heute durch zustandsorientierte oder prädiktive Instandhaltungsstrategien versucht, den Aufwand für die Instandhaltung zu minimieren, ohne dabei Einbußen bei der Verfügbarkeit in Kauf zu nehmen (s. hierzu z.B. EP 1 442 339 B1). Minimieren bedeutet in diesem Fall, die Wartungsintervalle zu verlängern. Die zusätzlich benötigten Sensoren zur Zustandserkennung (z.B. Schwingungssensoren) werden nur zur Überwachung verwendet, um Wartungsmaßnahmen zu planen und ggf. eine Notabschaltung einzuleiten (Schutzfunktion). Die Auswertung der Sensorsignale kann von einem Diagnosegerät oder direkt im Prozessleitsystem durchgeführt werden. Die standardmäßige Prozessregelung der Komponente, z.B. Drehzahlregelung, Lastregelung oder Ähnliches arbeitet mit dem zugeordneten standardmäßigen Sensor (z.B. Drehzahlsensor), macht aber heute keinen Gebrauch von den zusätzlichen Informationen aus beispielsweise einem Diagnose-Feldgerät, d.h. der Auswertung der Sensorsignale des Sensors zur Zustandserkennung.

Aus DE 102 54 819 A1 ist ein Verfahren zur Überwachung wenigstens einer Hydraulik-Komponente in einem Fahrzeug bekannt, wobei zur Überwachung wenigstens eine Erfassung der verschleißbedingenden Belastung der überwachten Komponenten und ein Vergleich der erfassten Belastung mit wenigstens einem vorgebbaren Schwellenwert vorgesehen ist und wobei abhängig vom Vergleich vorgebbare Maßnahmen, insbesondere zur Verringerung verschleißbedingender Belastungen, eingeleitet werden.

Der Erfindung liegt die Aufgabe zugrunde, ein Verfahren für einen verschleiß-minimierten Betrieb von Komponenten einer Anlage anzugeben.

Der Erfindung liegt weiter die Aufgabe zugrunde, eine Anlage mit Mitteln für einen verschleiß-minimierten Betrieb ihrer Komponenten anzugeben.

Diese Aufgabe wird durch ein Verfahren mit den in Aspruch 1 angegebenen Merkmalen gelöst.

Diese Aufgabe wird weiter durch eine Anlage mit den in Anspruch 7 angegebenen Merkmalen gelöst.

Um einen möglichst hohen Durchsatz zu erreichen, werden die Komponenten meist im Hochlastbereich betrieben. Wenn verschleiß-intensive Betriebszustände (z.B. Schwingungen) an einer Komponente auftreten, werden diese durch die vorhandenen oder ggf. neu hinzugefügten Sensoren und die zugehörige Auswertung ("Diagnose-Feldgeräte") erkannt und beispielsweise an ein Prozessleitsystem weitergegeben. Hier existiert eine ergänzende, überlagerte Funktion zur bestehenden Automatisierung, eine so genannte SmO-Funktion ("Stress minimized Operation of components"). Diese nutzt die zusätzlichen Informationen im laufenden Betrieb und greift in die konventionelle Automatisierung (Regelung/Steuerung) ein, so dass abnutzungsintensive Betriebszustände durch eine optimale Prozessführung reduziert oder vermieden werden. Wird beispielsweise eine Komponente in ihrer Resonanzfrequenz betrieben, sorgt die SmO-Funktion dafür, dass die Komponente mit einer geringfügigen anderen Drehzahl betrieben wird, bei der weit weniger starke Schwingungen auftreten. Diese Methode verlängert somit die Lebensdauer von Anlagenkomponenten und erlaubt eine optimale Auslastung einer Anlage bei gleichzeitiger Schonung der Anlagenkomponenten. Dabei handelt es sich um einen völlig neuartigen Ansatz, um durch geschickte Nutzung von Informationen aus Diagnose-Feldgeräten (oder vorhandenen Sensoren) für die Prozessführung die Wartungsintervalle einer Anlagenkomponente zu verlängern. Wenn ein Prozessleitsystem ohnehin vorhanden ist und ein Diagnose-Feldgerät wegen einer Schutzfunktion eingebaut wird, kann diese Verbesserung der Prozessführung ohne zusätzliche Hardware realisiert werden.

In einer vorteilhaften Form der Ausgestaltung wird ein erster Grenzwert für das Sensorsignal eingestellt, bei dessen Überschreiten die Änderung des Betriebszustandes der zumindest einen Anlagenkomponente aktiviert wird. Dieser Grenzwert kann dabei entweder anlagenspezifisch voreingestellt sein oder von einem Benutzer definiert werden. Hierdurch wird erreicht, dass nicht schon bei kleinen Änderungen in den Betrieb der Anlagenkomponente von der SmO-Funktion eingegriffen wird, sondern erst dann, wenn ein für die Abnutzung relevanter verschleiß-fördernder Betriebszustand eintritt. Dies kann dabei durch das Prozessleitsystem selbst erfolgen, wenn die Toleranzgrenze, d.h. der einstellbare Grenzwert überschritten, wird. Alternativ könnte auch eine Override-Regelung (ablösende Regelung) eingesetzt werden, bei der ab dem Überschreiten einer bestimmten Verschleißgrenze der normale Hauptregler von einem "Verschleißregler" abgelöst wird. Da jedoch für beide Regler nur ein Stelleingriff zur Verfügung steht, bedeutet dies, dass entweder der Hauptregler oder der Verschleißregler Zugriff auf das Stellglied erhält. Sobald der Verschleißregler das Kommando übernommen hat, wird die Hauptregelgröße völlig ignoriert, und zwar solange, bis der Verschleißregler den Verschleiß hinreichend reduzieren konnte. Durch die harte Umschaltung ist das o.g. feinfühlige Auffinden von Kompromissen nicht möglich.

In einer weiteren vorteilhaften Ausführungsform wird ein zweiter Grenzwert für das Sensorsignal eingestellt, bei dessen Überschreiten eine Schutzfunktion für die zumindest eine Anlagenkomponente aktiviert wird. Auch dieser Grenzwert kann dabei entweder anlagenspezifisch voreingestellt sein oder von einem Benutzer definiert werden. Hierdurch wird erreicht, dass die zumeist ohnehin installierte Schutzfunktion bzw. Instandhaltungsstrategie wie bisher greifen.

In einer weiteren vorteilhaften Ausführungsform wird bei Vorliegen einer Kopplung der zumindest einen Anlagenkomponente mit zumindest einer weiteren Anlagenkomponente bei der Änderung des Betriebszustandes der zumindest einen Anlagenkomponente auch der Betriebszustand der gekoppelten zumindest einen weiteren Anlagenkomponente koordiniert geändert. Somit ist sichergestellt, dass auch bei gekoppelten Komponenten wie z.B. zwei Pumpen, die verschiedene Stoffe fördern, um sie zu mischen, die SmO-Funktion in die übergeordnete Regelung eingreift und für eine koordinierte Drehzahländerung beider Pumpen sorgt. Somit bleibt das entstehende Produkt qualitativ gleich.

In einer weiteren vorteilhaften Ausführungsform wird bei Vorliegen eines verschleiß-fördernden Betriebszustandes die Änderung des Betriebszustandes der zumindest einen Anlagenkomponente durch zumindest ein Ziel der Prozessführung begrenzt. Auf diese Weise kann das Prozessleitsystem den Betrieb der Anlagenkomponente derart regulieren, dass eine Art Kompromiss zwischen den vorgegebenen Zielen der Prozessführung und dem Ziel der Minimierung des Verschleißes der betreffenden Anlagenkomponente erzielt wird, d.h. der Eingriff der SmO-Funktion erfolgt nur in sinnvollen Grenzen.

In einer weiteren vorteilhaften Ausführungsform werden dabei von einem Anwender zur Beeinflussung der Änderung des Betriebszustandes Prioritäten und/oder Gewichtungen für die Änderung und das zumindest eine Ziel der Prozessführung vergeben. Hierdurch kann die Wahl des Kompromisses vom Anwender beeinflusst werden.

In einer weiteren vorteilhaften Ausführungsform wird zur Beeinflussung der Änderung des Betriebszustandes der zumindest einen Anlagenkomponente aufgrund des zumindest einen Ziels der Prozessführung ein modellbasierter prädiktiver Mehrgrößenregler verwendet. Ein solcher Algorithmus bietet sich an, um verschieden, miteinander konkurrierende Regelungsziele zu behandeln. Er ist in der Lage, ein quadratisches Gütekriterium über einen bestimmten Zeithorizont in der Zukunft zu minimieren. Bisher werden im Gütekriterium die zukünftigen Regelabweichungen der Hauptregelgröße sowie die erforderlichen Stellgrößenänderungen berücksichtigt. Wenn jetzt zusätzlich ein Maß für die Verschleißintensität (z.B. aus der Schwingungsamplitude) bekannt ist, kann dieses als weitere Regelgröße hinzugenommen werden. Dazu wird ein passender Sollwert (typisch gleich Null) mit einem Toleranzband festgelegt, d.h. der Regler berücksichtigt diese Hilfsregelgröße nur dann, wenn sie größer als eine bestimmt Toleranzgrenze wird. Das Gütekriterium für den Prädiktivregler wird um einen dritten Summanden erweitert und nimmt damit folgende Form an:

$$J = \sum (w_i - y_i)^2 + \lambda \sum \Delta u_i^2 + \lambda_v \sum (w_{vi} - y_{vi})^2 \to \min.$$

$y_{vi}$ ist ein Maß für den Verschleiß zum Zeitpunkt $i$, $w_{vi}$ ist der Sollwert für den Verschleiß (typisch Null), $\lambda_v$ ist das Gewicht für den Verschleiß im Vergleich zur Hauptregelgröße. (Das Toleranzband ist in der Formel nicht berücksichtigt. Über eine Fallunterscheidung wird eigentlich die Abweichung des Istwerts vom Toleranzband anstatt vom exakten Sollwert ermittelt.) Voraussetzung hierfür ist, dass ein Experiment durchgeführt wird, um den Einfluss von Änderungen der Stellgröße (z.B. der Drehzahl) auf die Verschleißintensität (z.B. Schwingungsamplitude) zu identifizieren. Durch diesen erfindungsgemäßen Ansatz kann die SmO-Funktion mit Hilfe eines serienmäßigen Prädiktivreglers in Prozessleitsystemen realisiert werden.

Im Folgenden wird die Erfindung anhand des in der Figur dargestellten Ausführungsbeispiels näher beschrieben und erläutert.

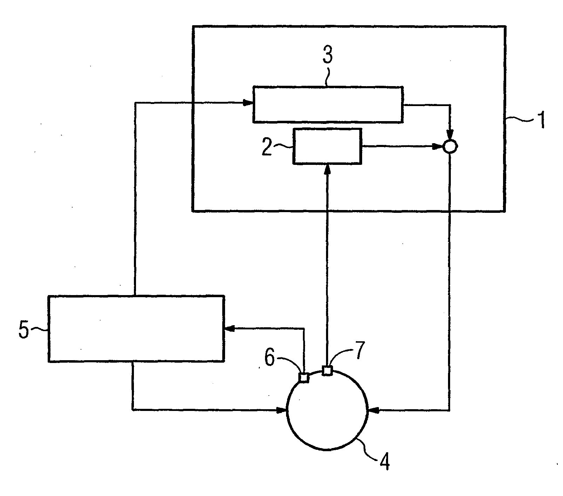

Fig 1 zeigt einen beispielhaften Regelkreis einer Anlage mit einem Prozessleitsystem 1 und einer Anlagenkomponente 4, die in diesem Beispiel als Kreiselpumpe ausgeführt ist. Das Prozessleitsystem 1 weist einen Regler 2 und eine SmO-Funktion 3 auf, die bei Auftreten eines verschleiß-fördernden Betriebszustandes der Kreiselpumpe 4 in die Prozessführung derart eingreifen kann, dass ein verschleiß-ärmerer Betriebszustand erreicht wird. Die Kreiselpumpe 4 wird über ein Durchflussregelung 2 auf eine bestimmte Drehzahl gebracht, die über einen Standardsensor, den Drehzahlsensor 7, gemessen wird. Kavitation an den Läuferschaufeln der reduziert den Wirkungsgrad der Pumpe 4 und erodiert die Schaufeln. Sie kann durch einen Körperschallsensor 6 erfasst oder anhand ihrer Entstehungsbedingungen (Druck, Temperatur, Materialeigenschaften) quantifiziert werden. Das Sensorsignal des Körperschallsensors 6 wird von einer Auswerteeinheit 5 auf Vorliegen eines verschleiß-fördernden Betriebszustandes überprüft. Tritt nun bei einer Drehzahl Kavitation in einem nicht wünschenswerten Ausmaß auf, greift die SmO-Funktion 3 in die Durchflussregelung 2 dahingehend ein, dass die Drehzahl soweit gesenkt wird, bis die Kavitation auf ein tolerierbares Maß reduziert wird. Die so eingestellt Drehzahl ist ein Kompromiss aus der von der Durchflussregelung 2 geforderten Drehzahl und der von der SmO-Funktion 3 tolerierten Drehzahl. Je nach Randbedingungen kann durch den verbesserten Wirkungsgrad auch bei reduzierter Drehzahl nahezu der gewünschte Durchfluss erreicht werden.

Zusammenfassend betrifft die Erfindung ein Verfahren zum verschleiß-minimierten Betrieb zumindest einer Anlagenkomponente einer Anlage sowie eine Anlage mit Mitteln zur Durchführung des genannten Verfahrens. Um einen verschleiß-minimierten Betrieb von Komponenten einer Anlage zu ermöglichen, wird vorgeschlagen, dass ein der Anlagenkomponente zugeordneter Sensor zur Zustandserkennung ein Sensorsignal an eine Auswerteeinheit übermittelt, dass die Auswerteeinheit das Sensorsignal daraufhin überprüft, ob ein verschleiß-fördernder Betriebszustand vorliegt und dass bei Vorliegen eines derartigen Betriebszustands die entsprechende Anlagenkomponente derart angesteuert wird, dass eine Änderung des Betriebszustandes hin zu einem verschleiß-ärmeren Betriebszustand erfolgt. Wird beispielsweise eine Komponente in ihrer Resonanzfrequenz betrieben, wird dafür gesorgt, dass die Komponente mit einer geringfügigen anderen Drehzahl betrieben wird, bei der weit weniger starke Schwingungen auftreten. Diese Methode verlängert somit die Lebensdauer von Anlagenkomponenten und erlaubt eine optimale Auslastung einer Anlage bei gleichzeitiger Schonung der Anlagenkomponenten.

**Patentansprüche**

1.  Verfahren zum verschleiß-minimierten Betrieb zumindest einer Anlagenkomponente (4) einer Anlage,

    - wobei ein der Anlagenkomponente (4) zugeordneter Sensor (6) zur Zustandserkennung ein Sensorsignal an eine Auswerteeinheit (5) übermittelt,
    - wobei die Auswerteeinheit (5) das Sensorsignal daraufhin überprüft, ob ein verschleiß-fördernder Betriebszustand vorliegt und
    - wobei bei Vorliegen eines derartigen Betriebszustands die entsprechende Anlagenkomponente (4) derart angesteuert wird, dass eine Änderung des Betriebszustandes hin zu einem verschleiß-ärmeren Betriebszustand erfolgt,

    **dadurch gekennzeichnet,**
    **dass** bei Vorliegen einer Kopplung der zumindest einen Anlagenkomponente (4) mit zumindest einer weiteren Anlagenkomponente bei der Änderung des Betriebszustandes der zumindest einen Anlagenkomponente (4) auch der Betriebszustand der gekoppelten zumindest einen weiteren Anlagenkomponente koordiniert geändert wird.

2.  Verfahren nach Anspruch 1,
    wobei ein erster Grenzwert für das Sensorsignal eingestellt wird, bei dessen Überschreiten die Änderung des Betriebszustandes der zumindest einen Anlagenkomponente (4) aktiviert wird.

3.  Verfahren nach Anspruch 1 oder 2,
    wobei ein zweiter Grenzwert für das Sensorsignal eingestellt wird, bei dessen Überschreiten eine Schutzfunktion für die zumindest eine Anlagenkomponente (4) aktiviert wird.

4.  Verfahren nach einem der vorhergehenden Ansprüche,
    wobei bei Vorliegen eines verschleiß-fördernden Betriebszustandes die Änderung des Betriebszustandes der zumindest einen Anlagenkomponente (4) durch zumindest ein Ziel der Prozessführung begrenzt wird.

5.  Verfahren nach Anspruch 4,
    wobei von einem Anwender zur Beeinflussung der Änderung des Betriebszustandes Prioritäten und/oder Gewichtungen für die Änderung und das zumindest ein Ziel der Prozessführung vergeben werden.

6.  Verfahren nach Anspruch 4 oder 5,
    wobei zur Beeinflussung der Änderung des Betriebszustandes der zumindest einen Anlagenkomponente (4) aufgrund des zumindest einen Ziels der Prozessführung ein modellbasierter prädiktiver Mehrgrößenregler verwendet wird.

7.  Anlage mit zumindest einer Anlagenkomponente (4) mit einem zugeordneten Sensor (6) zur Zustandserkennung der Anlagenkomponente (4), mit einer Auswerteeinheit (5) zur Überprüfung eines vom Sensor (6) übermittelten Sensorsignals auf Vorliegen eines verschleiß-fördernden Betriebszustandes der Anlagenkomponente (4) und mit Mitteln (2, 3) zur Ansteuerung der Anlagenkomponente (4) bei Vorliegen eines solchen Betriebszustandes derart, dass eine Änderung des Betriebszustandes hin zu einem verschleiß-ärmeren Betriebszustand erfolgt, **dadurch gekennzeichnet,**

**dass** bei Vorliegen einer Kopplung der zumindest einen Anlagenkomponente (4) mit zumindest einer weiteren Anlagenkomponente bei der Änderung des Betriebszustandes der zumindest einen Anlagenkomponente (4) auch der Betriebszustand der gekoppelten zumindest einen weiteren Anlagenkomponente koordiniert änderbar ist.

8. Anlage nach Anspruch 7,
wobei ein erster Grenzwert für das Sensorsignal einstellbar ist und wobei die Änderung des Betriebszustandes mittels der Mittel (2, 3) zur Ansteuerung der Anlagenkomponente (4) bei Überschreitung des ersten Grenzwertes aktivierbar ist.

9. Anlage nach Anspruch 7 oder 8,
wobei ein zweiter Grenzwert für das Sensorsignal einstellbar ist und wobei eine Schutzfunktion bei Überschreitung des zweiten Grenzwertes aktivierbar ist.

10. Anlage nach einem der Ansprüche 7 bis 9,
wobei bei Vorliegen eines verschleiß-fördernden Betriebszustandes die Änderung des Betriebszustandes der zumindest einen Anlagenkomponente (4) durch zumindest ein Ziel der Prozessführung begrenzbar ist.

11. Anlage nach Anspruch 10,
wobei von einem Anwender zur Beeinflussung der Änderung des Betriebszustandes Prioritäten und/oder Gewichtungen für die Änderung und das zumindest eine Ziel der Prozessführung vergebbar sind.

12. Anlage nach Anspruch 10 oder 11,
wobei zur Beeinflussung der Änderung des Betriebszustandes der zumindest einen Anlagenkomponente (4) aufgrund des zumindest einen Ziels der Prozessführung ein modellbasierter prädiktiver Mehrgrößenregler verwendbar ist.

## Claims

1. Method for the wear-minimised operation of at least one installation component (4) of an installation,

- wherein a sensor (6) for condition recognition that is assigned to the installation component (4) transmits a sensor signal to an evaluation unit (5),
- wherein the evaluation unit (5) thereupon checks the sensor signal to determine whether a wear-inducing operating condition is present, and
- wherein, if such an operating condition is present, the corresponding installation component (4) is controlled in such a way that its operating condition is changed in favour of a less wear-inducing operating condition,

**characterised in that**
if there is a coupling between the at least one installation component (4) and at least one other installation component, then the operating condition of the at least one other, coupled installation component will also be changed in a coordinated manner if the operating condition of the at least one installation component (4) is changed.

2. Method according to claim 1,
wherein a first limit value for the sensor signal is set, with the change in the operating condition of the at least one installation component (4) being activated if said first limit value is exceeded.

3. Method according to claim 1 or 2,
wherein a second limit value for the sensor signal is set, with a protective function for the at least one installation component (4) being activated if said second limit value is exceeded.

4. Method according to one of the preceding claims,
wherein, if a wear-inducing operating condition is present, the change in the operating condition of the at least one installation component (4) will be limited by at least one process management objective.

**5.** Method according to claim 4,
wherein in order to influence the change in the operating condition, priorities and/or weightings for the change and for the at least one process management objective are assigned by a user.

**6.** Method according to claim 4 or 5,
wherein a model-based predictive multiple-variable controller is used for influencing the change in the operating condition of the at least one installation component (4), based on the at least one process management objective.

**7.** Installation having at least one installation component (4) that has an assigned sensor (6) for detecting the condition of the installation component (4), an evaluation unit (5) for checking a sensor signal transmitted by the sensor (6) for the presence of a wear-inducing operating condition affecting the installation component (4), and means (2, 3) for controlling the installation component (4), if such an operating condition is present, in such a way that the operating condition will be changed in favour of a less wear-inducing operating condition,
**characterised in that**
if there is a coupling between the at least one installation component (4) and at least one other installation component, then the operating condition of the at least one other, coupled installation component can also be changed in a coordinated manner if the operating condition of the at least one installation component (4) is changed.

**8.** Installation according to claim 7,
wherein a first limit value for the sensor signal can be set and wherein the changing of the operating condition by means of the means (2, 3) for controlling the installation component (4) can be activated if the first limit value is exceeded.

**9.** Installation according to claim 7 or 8,
wherein a second limit value for the sensor signal can be set and wherein a protective function can be activated if the second limit value is exceeded.

**10.** Installation according to one of claims 7 to 9,
wherein, if a wear-inducing operating condition is present, the change in the operating condition of the at least one installation component (4) can be limited by at least one process management objective.

**11.** Installation according to claim 10,
wherein in order to influence the change in the operating condition, priorities and/or weightings for the change and for the at least one process management objective can be assigned by a user.

**12.** Installation according to claim 10 or 11,
wherein a model-based predictive multiple-variable controller can be used for influencing the change in the operating condition of the at least one installation component (4), based on the at least one process management objective.

**Revendications**

**1.** Procédé pour un fonctionnement qui minimise l'usure d'au moins un élément ( 4 ) d'une installation,

- dans lequel un capteur ( 6 ) affecté à l'élément ( 4 ) de l'installation transmet, pour la reconnaissance d'état, un signal de capteur à une unité ( 5 ) d'exploitation,
- dans lequel l'unité ( 5 ) d'exploitation contrôle ensuite le signal du capteur pour savoir s'il y a un état de fonctionnement favorisant l'usure et
- dans lequel, en présence d'un état de fonctionnement de ce genre, on commande l'élément ( 4 ) de l'installation correspondant de manière à produire une modification de l'état de fonctionnement en passant à un état de fonctionnement donnant moins d'usure,

**caractérisé,**
**en ce qu'**en présence d'un accouplement du au moins un élément ( 4 ) d'installation avec au moins un autre élément d'installation, on modifie d'une manière coordonnée, lors de la modification de l'état de fonctionnement du au moins un élément ( 4 ) de l'installation, également l'état de fonctionnement du au moins un autre élément de l'installation couplé.

**2.** Procédé suivant la revendication 1,
dans lequel, on règle une première valeur limite pour le signal de capteur et, si elle est dépassée, on active la modification de l'état de fonctionnement du au moins un élément ( 4 ) de l'installation.

**3.** Procédé suivant la revendication 1 ou 2,
dans lequel, on règle une deuxième valeur limite du signal de capteur et, si elle est dépassée, on active une fonction de protection du au moins un élément ( 4 ) de l'installation.

**4.** Procédé suivant l'une des revendications précédentes, dans lequel, en présence d'un état de fonctionnement favorisant l'usure, on limite la modification d'état de fonctionnement du au moins un élément ( 4 ) de l'installation par au moins un but de la conduite du processus.

**5.** Procédé suivant la revendication 4,
dans lequel il est prescrit par un utilisateur, pour influer sur la modification de l'état de fonctionnement, des priorités et/ou des pondérations pour la modification et le au moins un but de la conduite du processus.

**6.** Procédé suivant la revendication 4 ou 5,
dans lequel, pour influer sur la modification de l'état de fonctionnement du au moins un élément ( 4 ) de l'installation, on utilise, sur la base du au moins un but de la conduite de processus, un régulateur prédictif de plusieurs grandeurs fondé sur un modèle.

**7.** Installation comprenant au moins un élément (4) de l'installation ayant un capteur (6) affecté pour la reconnaissance de l'état de l'élément ( 4 ) de l'installation, comprenant une unité (5) d'exploitation pour contrôler un signal de capteur transmis par le capteur ( 6 ) indiquant la présence d'un état de fonctionnement favorisant l'usure de l'élément ( 4 ) de l'installation et des moyens ( 2 et 3 ) de commande de l'élément ( 4 ) de l'installation en présence d'un état de fonctionnement de ce genre de manière à produire une modification de l'état de fonctionnement vers un état de fonctionnement donnant moins d'usure,
**caractérisée en ce que**,
en la présence d'un accouplement du au moins un élément ( 4 ) de l'installation avec au moins un autre élément de l'installation lors de la modification de l'état de fonctionnement du au moins un élément ( 4 ) de l'installation, l'état de fonctionnement de l'autre élément d'installation couplé peut être modifié aussi d'une manière coordonnée.

**8.** Installation suivant la revendication 7,
dans laquelle une première valeur limite du signal de capteur peut être réglée et dans laquelle la modification de l'état de fonctionnement à l'aide des moyens ( 2, 3 ) de commande de l'élément ( 4 ) de l'installation peut être activée lorsque la première valeur limite est dépassée.

**9.** Installation suivant la revendication 7 ou 8,
dans laquelle une deuxième valeur limite du capteur de signal peut être réglée et une fonction de protection peut être activée lorsque la deuxième valeur limite est dépassée.

**10.** Installation suivant l'une des revendications 7 à 9,
dans laquelle, en présence d'un état de fonctionnement favorisant l'usure, la modification de l'état de fonctionnement du au moins un élément ( 4 ) de l'installation peut être limitée par au moins un but de la conduite de processus.

**11.** Installation suivant la revendication 10,
dans laquelle des priorités et/ou des pondérations pour la modification et le au moins un but de la conduite de processus peuvent être prescrites par un utilisateur pour influer sur la modification de l'état de fonctionnement.

**12.** Installation suivant la revendication 10 ou 11,
dans laquelle, pour influer sur la modification de l'état de fonctionnement du au moins un élément ( 4 ) de l'installation, on peut utiliser un régulateur prédictif de plusieurs grandeurs fondé sur un modèle sur la base du au moins un but de la conduite de processus.

**EP 2 067 082 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1442339 B1
- DE 10254819 A1